# EUROPEAN PATENT SPECIFICATION

(11) **EP 3 921 366 B1**
(45) Date of publication and mention of the grant of the patent: **10.05.2023**
(21) Application number: 20708530.9
(22) Date of filing: 04.02.2020
(51) Int. Cl.: C08L 1/00, C08J 5/18, D06C 15/00

(54) **MANUFACTURING PATTERNED CELLULOSE-BASED FILM**
HERSTELLUNG GEMUSTERTER CELLULOSEFILME
FABRICATION DE FILMS DE CELLULOSE IMPRIMÉS

(30) Priority: 07.02.2019 FI 20197019
(43) Date of publication of application: 15.12.2021
(73) Proprietor: Teknologian Tutkimuskeskus VTT Oy, 02150 Espoo (FI)
(72) Inventor: MÄKELÄ, Tapio, 02044 VTT (FI)
(74) Representative: Berggren Oy
(86) International application number: PCT/FI2020/050067
(87) International publication number: WO 2020/161390

(56) References cited:
- ZHOU YILIANG ET AL: "Fabrication of patterned cellulose film via solvent-assisted soft nanoimprint lithography at a submicron scale", CELLULOSE, SPRINGER NETHERLANDS, NETHERLANDS, vol. 25, no. 9, 23 July 2018 (2018-07-23), pages 5185-5194, XP036572492, ISSN: 0969-0239, DOI: 10.1007/S10570-018-1920-2 [retrieved on 2018-07-23]
- MÄKELÄ TAPIO ET AL: "Fabrication of micropillars on nanocellulose films using a roll-to-roll nanoimprinting method", MICROELECTRONIC ENGINEERING, ELSEVIER PUBLISHERS BV., AMSTERDAM, NL, vol. 163, 29 May 2016 (2016-05-29), pages 1-6, XP029671831, ISSN: 0167-9317, DOI: 10.1016/J.MEE.2016.05.023 cited in the application
- Urte Paassen: "Wissen rund um die Hauswirtschaft -Wäschemangeln", , 19 October 2019 (2019-10-19), XP055693058, Retrieved from the Internet: URL:https://www.hauswirtschaft.info/waesch e/mangel.php [retrieved on 2020-05-08]
- PB: "PB ZYLINDERMANGELN", , 1 January 2000 (2000-01-01), XP055693075, Retrieved from the Internet: URL:https://www.girbau.com/documents/downl oad_document/301/de [retrieved on 2020-05-08]

## Description

### FIELD

The present invention relates to manufacturing of a patterned cellulose-based film.

### BACKGROUND

Fabrication of micropillars on nanocellulose films using a roll-to-roll nanoimprinting method, Tapio Mäkelä et al. , Microelectronic Engineering, Volume 163, 1 September 2016, Pages 1-6, discloses a method to modify biobased cellulose-based films with thermal roll-to-roll nanoimprinting lithography (R2RNIL) to produce microstructured films. In NIL, a patterned roll and an elastic backing roll are pressed against each other at elevated temperatures, and the pattern is replicated onto the film structure. Height of the replicated pattern are controlled by the temperature, printing speed (contact time to film) and pressure applied in the R2RNIL.

However, the nanocellulose films are brittle and therefore the pressure and temperature applied in the R2RNIL method should be carefully controlled to avoid breakage of the films, which also introduced complexity into the fabrication.

### SUMMARY

It is an objective of the present invention alleviate at least part of the disadvantages indicated above. The objective is achieved by the subject-matter of the appended independent claims.

According to a first aspect of the present invention there is provided a method for manufacturing a patterned cellulose-based film, comprising:
- receiving a cellulose-based film to be modified with a pattern provided by a mold; and
- causing absorption of water into the received cellulose-based film; and
- modifying the cellulose-based film by the cellulose-based film pressing against the mold in response to the increased volume of the cellulose-based film caused by the absorbed water.

According to a second aspect of the present invention there is provided an arrangement for manufacturing a patterned cellulose-based film comprising:
- a first surface for supporting a cellulose-based film to be modified with a pattern provided by a mold;
- a second surface for supporting the mold, said second surface being arranged at a distance from the first surface, for accommodating the cellulose-based film and the mold on top of each other between the first surface and the second surface; and
- a humidifier device for causing absorption of water into the cellulose-based film such that when the cellulose-based film and the mold are positioned on top of each other between the first surface and the second surface, the cellulose-based film is pressed against the mold in response to the increased volume of the cellulose-based film caused by the absorbed water.

According to a third aspect of the present invention there is provided a roll-to-roll device comprising an input roll of cellulose-based film and an output roll and the arrangement according to the second aspect, wherein the roll-to-roll device is configured to feed the cellulose-based film from the input roll to the output roll through the arrangement according to the second aspect.

According to a fourth aspect of the present invention there is provided a calender machine comprising the arrangement according to the second aspect.

Further aspects of the present invention comprise one or more of:
- drying the cellulose-based film after the cellulose-based film has been modified;
- the cellulose-based film is a polymeric cellulose-based, fibrillated cellulose-based, or fiber cellulose-based film, cellulose nanofibril, CNF, preferably a TEMPO-oxidized cellulose nanofibril, TEMPO-CNF, film;
- the absorption of water is caused by subjecting the cellulose-based film to water vapor having a relative humidity from 75% to almost 100%, preferably from 80% to almost 100%, for example from 80% to 99,9% or less, for example from 80% to 97%;
- the pattern is replicated to the cellulose-based film by nanoimprint lithography or by embossing;
- the first surface and second surface are rotatable for receiving a continuous feed of cellulose-based film and producing a continuous patterned cellulose-based film.

At least some embodiments of the present invention provide manufacturing patterned cellulose-based films without excessive pressure which simplifies patterning of cellulose-based films in general, particularly, when the film has brittle character.

### SUMMARY OF DRAWINGS

In the following embodiments are described with reference to the accompanying drawings in which
Fig. 1 and Fig. 2 illustrate examples of methods in accordance with at least some embodiments;
Fig. 3 illustrates an example of an arrangement in accordance with at least some embodiments;
Fig. 4 illustrates an example of modifying cellulose-based film in accordance with at least some embodiments; and
Fig. 5 illustrates an example of a roll-to-roll device in accordance with at least some embodiments.

### DETAILED DESCRIPTION

There is provided manufacturing a patterned cellulose-based film. Cellulose-based film to be modified with a pattern provided by a mold is caused to absorb water. The absorbed water causes a volume increase of the cellulose-based film, which causes modifying the cellulose-based film by the cellulose-based film pressing against the mold. Since the cellulose-based film is pressed against the mold due to swelling caused by water molecules absorbed into the cellulose-based film, the pattern of the mold may be replicated to surface of the cellulose-based film without necessarily requiring any external pressure.

A cellulose-based film may be a polymeric cellulose-based, fibrillated cellulose-based, or fiber cellulose-based film. A nanofibrillated cellulose-based film may refer to fibrillated cellulose-based film comprising cellulose fibers with nanoscale diameter and a narrow size distribution of the fibers. Similarly, a nanofiber cellulose-based film may refer to fiber cellulose-based film comprising cellulose fibers with nanoscale diameter and a narrow size distribution of the fibers. Examples of cellulose-based films comprise a cellulose nanofibril (CNF) film, a nanofibrillated cellulose film and a TEMPO-oxidized CNF (TEMPO-CNF) film. Cellulose-based films have applications in packaging industry, electronics and diagnostics.

Nanoimprint lithography (NIL) is a process for replicating micro- and nanoscale patterns. Roll-to-roll (R2R) nanoimprint lithography provides a high-throughput for many industrial-scale applications.

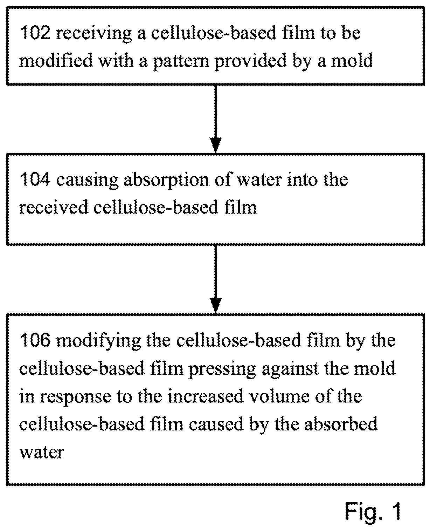

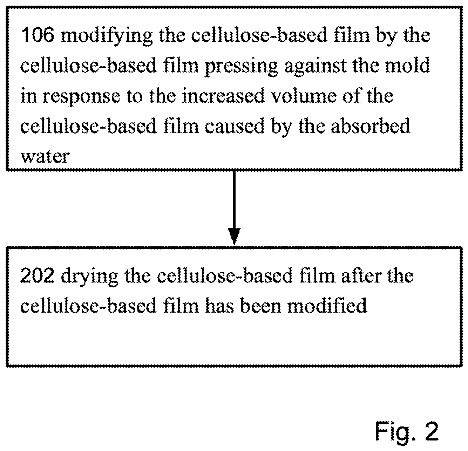

Fig. 1 and Fig. 2 illustrate examples methods in accordance with at least some embodiments. Referring to Fig. 1, phase 102 comprises receiving a cellulose-based film to be modified with a pattern provided by a mold. Phase 104 comprises causing absorption of water into the received cellulose-based film. Phase 106 comprises modifying the cellulose-based film by the cellulose-based film pressing against the mold in response to the increased volume of the cellulose-based film caused by the absorbed water. Since, the cellulose-based film is pressed against the mold due to swelling caused by water molecules absorbed into the cellulose-based film, the pattern of the mold may be replicated to surface of the cellulose-based film without necessarily requiring any external pressure. However, it should be appreciated that in practice a small external pressure may be applied. Suitable molds comprise a flexible thin metal mold, Si mold or polymer mold. The flexible thin metal mold may comprise Ni, Al or other metals. Since the external pressure is not needed or small, patterning of the cellulose-based film, particularly a cellulose-based film that is of brittle character, such that risk of breakage of the cellulose-based film may be at least partly alleviated. In an example, the pattern may comprise micrometer, nanometer, millimeter and/or centimeter scale structures. Accordingly, dimensions of the structures, such as height, width, depth and diameter, may vary from nanometer scale to centimeter scale. The method is particularly useful for patterns having larger structures, because their modification by other methods could require high external pressure which could lead to breakage of the cellulose-based film. The cellulose-based film may be dried after being modified without active measures, when the cellulose-based film is under conditions which support evaporation of water from the cellulose-based film. The cellulose-based film may be dried, when ambient humidity is lower than humidity of the cellulose-based film. The drying and also curing caused by the drying of the cellulose-based film may therefore be accomplished without active measures.

Referring to Fig. 2, in a method according to an embodiment, phase 106 may be followed by phase 202 of drying the cellulose-based film after the cellulose-based film has been modified. In this way the cellulose-based film may be actively dried such that the pattern may be caused to cure at a controllable rate.

In an embodiment, the cellulose-based film is a polymeric cellulose-based, fibrillated cellulose-based, or fiber cellulose-based film, cellulose nanofibril (CNF), preferably a TEMPO-oxidized cellulose nanofibril (TEMPO-CNF) film.

The CNF may be produced from mechanical disintegration of bleached hardwood kraft pulp that is commercially available. TEMPO-oxidized cellulose nanofibrils (TEMPO-CNFs) may be produced from dried, bleached softwood kraft pulp. The softwood kraft pulp may be TEMPO-oxidized, where oxidation is mediated by 2,2,6,6-tetramethylpiperidine-1-oxyl (TEMPO) radical. The TEMPO-oxidation may follow a protocol described by Saito et al. in "Homogeneous Suspensions of Individualized Microfibrils from TEMPO-Catalyzed Oxidation of Native Cellulose", Biomacromolecules, 2006, 7 (6), pp 1687-1691 DOI: 10.1021/bm060154s Publication Date (Web): May 3, 2006. Further details of CNF and TEMPO-CNF film preparation may be referred to in Section 2.1 of Mäkelä et al. referenced above. TEMPO-oxidized CNF (TEMPO-CNF) films have brittle character, whereby their patterning in accordance with an embodiment without necessarily any external pressure is particularly useful.

In an embodiment, phase 104 comprises that the absorption of water is caused by subjecting the cellulose-based film to water vapor having a relative humidity from 75% to almost 100%, preferably from 80% to almost 100%, for example from 80% to 99,9% or less, for example from 80% to 97%. Absorption of water molecules has been found to have a particularly strong impact on volume of the cellulose-based film, when the film is subjected to water vapor having relative humidity above 75% and even stronger impact, when the humidity is above 80%.

In an embodiment, phase 106 comprises that the pattern is replicated to the cellulose-based film by nanoimprint lithography or by embossing. Nanoimprint lithography is an efficient method for fabricating large area nano- and micropatterns on various substances, typically thermoplastics. Details of nanoimprint lithography may be referred to in S.Y. Chou, P.R. Krauss, P.J. Renstrom, Nanoimprint lithography J. Vac. Sci. Technol. B, 14 (6) (1996), pp. 4129-4133. Hot embossing is described in Micro hot embossing of thermoplastic polymers: a review, Linfa Peng et al 2014 J. Micromech. Microeng. 24 013001.

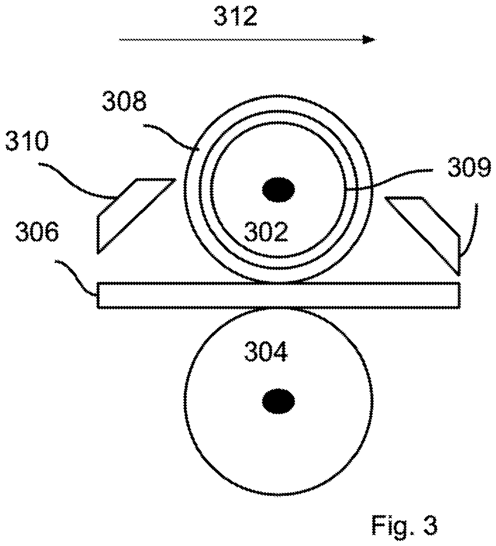

Fig. 3 illustrates an example of an arrangement in accordance with at least some embodiments. The arrangement provides may be configured to perform a method in accordance with an embodiment. The arrangement comprises a first surface for supporting a cellulose-based film 306 to be modified with a pattern provided by a mold 308 and a second surface for supporting the mold. The second surface may be arranged at a distance from the first surface. The arrangement of the surfaces provides that the cellulose-based film and the mold may be accommodated on top of each other between the first surface and the second surface. The arrangement comprises a humidifier device 310 for causing absorption of water into the cellulose-based film such that when the cellulose-based film and the mold are positioned on top of each other between the first surface and the second surface, the cellulose-based film is pressed against the mold in response to the increased volume of the cellulose-based film caused by the absorbed water. Accordingly, the humidifier device provides that water content of the cellulose-based film may be increased to a sufficient level or above and maintained at at least the sufficient level for modification of the cellulose-based film by the mold, for example by imprinting or embossing.

Therefore, the pattern of the mold may be replicated to the cellulose-based film without necessarily requiring any external pressure. When the cellulose-based film and the mold are on top of each other the cellulose-based film 306 is in contact or almost in contact with the mold 308, whereby the cellulose-based film may be conformed to the pattern of the mold, when the volume of the cellulose-based film is increased due to the absorbed water. This provides patterning of the cellulose-based film that is of brittle character such that risk of breakage of the cellulose-based film may be at least partly alleviated.

In an embodiment the humidifier device 310 may be configured to subject the cellulose-based film to water vapor having a relative humidity from 75% to almost 100%, preferably from 80% to almost 100%, for example from 80% to 99,9% or less, for example from 80% to 97%.

It should be appreciated that location of the humidifier device with respect to one or more other parts of the arrangement and direction of water vapor flow of the humidifier device may be adapted for efficient absorption of water into the cellulose-based film.

In an embodiment the arrangement comprises a drying device 309 for drying the cellulose-based film after the cellulose-based film has been modified, e.g. after modification by imprinting or embossing. Examples of the drying devices comprise a heater. The heater may be an electric heater. The drying device may be arranged to heat one or more of the rolls, 302, 304. The drying device may be arranged inside one or both of the rolls 302, 304. On the other hand, the drying device may be arranged to heat ambient air apart from the humidifier device 310. In an example, the humidifier device may be located on one side of the rolls 302, 304 and the drying device may be arranged on another side of the rolls 302, 304, such that efficient absorption of water into the cellulose-based film is facilitated before modifying the cellulose-based film and after modification of the cellulose-based film the water may be efficiently evaporated from the patterned cellulose-based film. The humidifier device is preferably located on the side of the rolls, where the cellulose-based film enters between the rolls and the dryer device is preferably located on the side of the rolls, where the patterned cellulose-based film is received.

In an example the second surface may be provided by a perimeter surface of a roll 302 around which the mold is wrapped around. The first surface may be provided by a perimeter surface of another roll 304. The rolls 302, 304 may be rotatable such that the cellulose-based film may travel in a direction 312 between the rolls from one side of the rolls to another side. The rolls may be at a distance from each other such that the cellulose-based film and the mold are brought into contact or at least almost to contact with each other, when they are on top of each other between the surfaces. The mold may be a flexible thin metal mold (such as a mold comprising Ni, Al or other metal) or Si- or polymer-mould that is clamped mechanically on the roll 302 and heated to a temperature for modifying, e.g. by imprinting or embossing, the cellulose-based film. Also other materials may be used for the mold provided that a patterns may be applied on the material. The opposite roll 304, i.e. lower roll, may be kept at ambient temperature, e.g. room temperature. The heating provides that the cellulose-based film may be dried.

In another example the first surface and the second surface may be provided by flat support surfaces. The distance between the surfaces may be adjusted by gears manually or automatically such that the cellulose-based film and the mold are brought into contact or at least almost to contact with each other, when they are on top of each other between the surfaces. In this position, the pattern may be replicated to surface of the cellulose-based film by the cellulose-based film pressing against the mold in response to the increased volume of the cellulose-based film caused by the absorbed water, in accordance with phase 106 of Fig. 1.

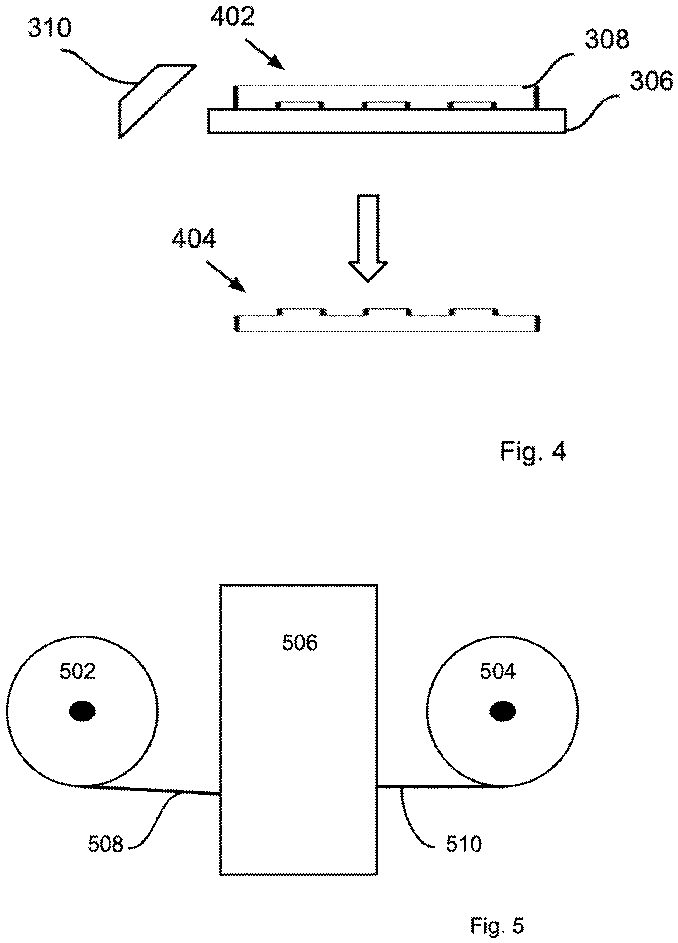

Fig. 4 illustrates modifying a cellulose-based film in accordance with at least some embodiments. The modification of the cellulose-based film may be performed by the arrangement illustrated in Fig. 3, for example. Item 402 illustrates a cellulose-based film 306 in contact or almost in contact with the mold 308. Water content of the received cellulose-based film may be increased in accordance with phase 104 described with Fig. 1 by a humidifier device 310. The absorbed water causes an increase of volume of the cellulose-based film and in this way the cellulose-based is caused to press against the mold in accordance with phase 106 described with Fig. 1. Item 404 illustrates the patterned cellulose-based film, where the pattern of the mold has been replicated to surface of the cellulose-based film, for example by imprinting or embossing, by the cellulose-based film conforming to the pattern of the mold in response to the absorption of water.

Fig. 5 illustrates an example of a roll-to-roll device (R2RD) in accordance with at least some embodiments. The R2RD may be configured to replicate a pattern to surface of a cellulose-based film by NIL, embossing or hot embossing. The R2RD may comprise an input roll 502 of cellulose-based film and an output roll 504 and an arrangement 506 in accordance with the arrangement described with Fig. 3. The R2RD is configured to feed the cellulose-based film 508 from the input roll to the output roll through the arrangement. In this way the cellulose-based film is patterned by the arrangement and a patterned cellulose-based film 510 is fed to the output roll from the arrangement.

In an example of operating the R2RD, the cellulose-based film 508 may be manually arranged to travel through the arrangement to the output roll. Rotating speeds of the input roll 502 and the output roll 504 may be adapted to an imprinting speed or embossing speed of the arrangement 506, whereby continuous feed of cellulose-based film to the arrangement may be provided for producing a continuous patterned cellulose-based film to the output roll 504.

In an embodiment, a calender machine comprises an arrangement described with Fig. 3. The calender machine may be used to process a cellulose-based film that is additionally modified, for example by imprinting or embossing, in accordance with phase 106 of Fig. 1. Examples of processing the cellulose-based film by the calender machine comprise applying a finishing or a coating to the cellulose-based film. Examples of calender machines comprise intermediate calender, super-calender, soft-calender, multi-nip calender and calender with extended roller nip.

### LIST OF ACRONYMS

- CNF: Cellulose nanofibril
- NIL: Nanoimprint lithography
- R2R: Roll-to-roll
- R2RD: Roll-to-roll device
- R2RNIL: Roll-to-roll nanoimprint lithography
- TEMPO: 2,2,6,6-tetramethylpiperidine-1 -oxyl
- TEMPO-CNF: TEMPO-oxidized cellulose nanofibril

### LIST OF REFERENCE SIGNS

- 102 to 106, 202: Phases of methods
- 302,304: Roll
- 306: Cellulose-based film
- 308: Mold
- 309: Drying device
- 310: Humidifier device
- 312: Direction
- 402: Cellulose-based film in contact or almost in contact with the mold
- 404: Patterned cellulose-based film
- 502: Input roll
- 504: Output roll
- 506: Arrangement
- 508: Cellulose-based film
- 510: Patterned cellulose-based film

## Claims

1. A method for manufacturing a patterned cellulose-based film, comprising:
- receiving a cellulose-based film to be modified with a pattern provided by a mold; and
- causing absorption of water into the received cellulose-based film; and
- modifying the cellulose-based film by the cellulose-based film pressing against the mold in response to the increased volume of the cellulose-based film caused by the absorbed water.

2. The method according to claim 1, comprising:
- drying the cellulose-based film after the cellulose-based film has been modified.

3. The method according to claim 1 or 2, wherein the cellulose-based film is a polymeric cellulose-based, fibrillated cellulose-based, or fiber cellulose-based film, cellulose nanofibril, CNF, preferably a TEMPO-oxidized cellulose nanofibril, TEMPO-CNF, film.

4. The method according to any of claims 1 to 3, wherein the absorption of water is caused by subjecting the cellulose-based film to water vapor having a relative humidity from 75% to almost 100%, preferably from 80% to almost 100%, for example from 80% to 99,9% or less, for example from 80% to 97%.

5. The method according to any of claims 1 to 4, wherein the pattern is replicated to the cellulose-based film by nanoimprint lithography, NIL, or by embossing.

6. An arrangement for manufacturing a patterned cellulose-based film comprising:
- a first surface for supporting a cellulose-based film to be modified with a pattern provided by a mold;
- a second surface for supporting the mold, said second surface being arranged at a distance from the first surface, for accommodating the cellulose-based film and the mold on top of each other between the first surface and the second surface; and
- a humidifier device for causing absorption of water into the cellulose-based film such that when the cellulose-based film and the mold are positioned on top of each other between the first surface and the second surface, the cellulose-based film is pressed against the mold in response to the increased volume of the cellulose-based film caused by the absorbed water.

7. The arrangement according to claim 6, wherein the arrangement comprises a drying device for drying the cellulose-based film after the cellulose-based film has been modified.

8. The arrangement according to claim 6 or 7, wherein the cellulose-based film is a polymeric cellulose-based, fibrillated cellulose-based, or fiber cellulose-based film, cellulose nanofibril, CNF, preferably a TEMPO-oxidized cellulose nanofibril, TEMPO-CNF, film.

9. The arrangement according to claim 6, 7 or 8, wherein the humidifier device is configured to subject the cellulose-based film to water vapor having a relative humidity from 75% to almost 100%, preferably from 80% to almost 100%, for example from 80% to 99,9% or less, for example from 80% to 97%.

10. The arrangement according to any of claims 6 to 9, wherein the pattern is replicated to the cellulose-based film by nanoimprint lithography, NIL, or by embossing.

11. The arrangement according to any of claims 6 to 10, wherein the first surface and second surface are rotatable for receiving a continuous feed of cellulose-based film and producing a continuous patterned cellulose-based film.

12. A calender machine comprising the arrangement according to any of claims 6 to 11.

13. A roll-to-roll device comprising an input roll of cellulose-based film and an output roll and the arrangement according to any of claims 6 to 11, wherein the roll-to-roll device is configured to feed the cellulose-based film from the input roll to the output roll through the arrangement.

## Patentansprüche

1. Verfahren zur Herstellung einer gemusterten Folie auf Cellulosebasis, umfassend:
- Aufnehmen einer Folie auf Cellulosebasis, die mit einem durch eine Form bereitgestellten Muster zu verändern ist; und
- Bewirken der Absorption von Wasser in die aufgenommene Folie auf Cellulosebasis; und
- Verändern der Folie auf Cellulosebasis durch Pressen der Folie auf Cellulosebasis an die Form als Reaktion auf das erhöhte Volumen der Folie auf Cellulosebasis, das durch das absorbierte Wasser bewirkt wird.

2. Verfahren nach Anspruch 1, umfassend:
- Trocknen der Folie auf Cellulosebasis, nachdem die Folie auf Cellulosebasis verändert worden ist.

3. Verfahren nach Anspruch 1 oder 2, wobei die Folie auf Cellulosebasis eine Polymerfolie auf Cellulosebasis, fibrillierte Folie auf Cellulosebasis, oder Faserfolie auf Cellulosebasis, Cellulose-Nanofibrillen-, CNF-, vorzugsweise eine TEMPO-oxidierte Cellulose-Nanofibrillen-, TEMPO-CNF-Folie ist.

4. Verfahren nach einem der Ansprüche 1 bis 3, wobei die Absorption von Wasser durch Aussetzen der Folie auf Cellulosebasis einem Wasserdampf bewirkt wird, der eine relative Feuchtigkeit von 75% bis beinahe 100%, vorzugsweise von 80% bis beinahe 100%, beispielsweise von 80% bis 99,9% oder weniger, beispielsweise von 80% bis 97% aufweist.

5. Verfahren nach einem der Ansprüche 1 bis 4, wobei das Muster durch Nanoimprint-Lithographie, NIL, oder durch Prägen auf die Folie auf Cellulosebasis abgebildet wird.

6. Anordnung zur Herstellung einer gemusterten Folie auf Cellulosebasis, umfassend:
- eine erste Oberfläche zum Stützen einer Folie auf Cellulosebasis, die mit einem durch eine Form bereitgestellten Muster zu verändern ist;
- eine zweite Oberfläche zum Stützen der Form, wobei die zweite Oberfläche in einem Abstand von der ersten Oberfläche angeordnet ist, um die Folie auf Cellulosebasis und die Form übereinander zwischen der ersten Oberfläche und der zweiten Oberfläche unterzubringen; und
- eine Befeuchter-Vorrichtung zum Bewirken von Absorption von Wasser in die Folie auf Cellulosebasis, sodass, wenn die Folie auf Cellulosebasis und die Form zwischen der ersten Oberfläche und der zweiten Oberfläche übereinander positioniert sind, die Folie auf Cellulosebasis als Reaktion auf das erhöhte Volumen der Folie auf Cellulosebasis, das durch das absorbierte Wasser bewirkt wird, an die Form gepresst wird.

7. Anordnung nach Anspruch 6, wobei die Anordnung eine Trockenvorrichtung zum Trocknen der Folie auf Cellulosebasis umfasst, nachdem die Folie auf Cellulosebasis verändert worden ist.

8. Anordnung nach Anspruch 6 oder 7, wobei die Folie auf Cellulosebasis eine Polymerfolie auf Cellulosebasis, fibrillierte Folie auf Cellulosebasis, oder Faserfolie auf Cellulosebasis, Cellulose-Nanofibrillen-, CNF-, vorzugsweise eine TEMPO-oxidierte Cellulose-Nanofibrillen-, TEMPO-CNF-Folie ist.

9. Anordnung nach Anspruch 6, 7 oder 8, wobei die Befeuchter-Vorrichtung konfiguriert ist, um die Folie auf Cellulosebasis einem Wasserdampf auszusetzen, der eine relative Feuchtigkeit von 75% bis beinahe 100%, vorzugsweise von 80% bis beinahe 100%, beispielsweise von 80% bis 99,9% oder weniger, beispielsweise von 80% bis 97% aufweist.

10. Anordnung nach einem der Ansprüche 6 bis 9, wobei das Muster durch Nanoimprint-Lithographie, NIL, oder durch Prägen auf die Folie auf Cellulosebasis abgebildet wird.

11. Anordnung nach einem der Ansprüche 6 bis 10, wobei die erste Oberfläche und die zweite Oberfläche drehbar sind, um eine durchgehende Zuführung von Folie auf Cellulosebasis aufzunehmen, und eine durchgehende gemusterte Folie auf Cellulosebasis zu erzeugen.

12. Kalander-Maschine, umfassend die Anordnung nach einem der Ansprüche 6 bis 11.

13. Rolle-zu-Rolle Vorrichtung, umfassend eine Eingangsrolle einer Folie auf Cellulosebasis und eine Ausgangsrolle, und die Anordnung nach einem der Ansprüche 6 bis 11, wobei die Rolle-zu-Rolle Vorrichtung konfiguriert ist, um die Folie auf Cellulosebasis von der Eingangsrolle durch die Anordnung hindurch der Ausgangsrolle zuzuführen.

## Revendications

1. Procédé de fabrication d'un film à base de cellulose et à motifs, comprenant :
- la réception d'un film à base de cellulose à modifier par un motif fourni par un moule ; et
- la provocation d'une absorption d'eau dans le film à base de cellulosereçu ; et
- la modification du film à base de cellulose par pressage du film à base de cellulose contre le moule en réponse au volume augmenté du film à base de cellulose provoqué par l'eau absorbée.

2. Procédé selon la revendication 1, comprenant :
- le séchage du film à base de cellulose après que le film à base de cellulose a été modifié.

3. Procédé selon la revendication 1 ou 2, le film à base de cellulose étant un film à base de cellulose polymère, un film à base de cellulose fibrillé ou un film à base de cellulose à fibres, un film en nanofibrille de cellulose, CNF, de préférence en nanofibrille de cellulose oxydée par TEMPO, TEMPO-CNF.

4. Procédé selon l'une quelconque des revendications 1 à 3, l'absorption d'eau étant provoquée par la soumission du film à base de cellulose à de la vapeur d'eau présentant une humidité relative de 75% à pratiquement 100%, de préférence de 80% à pratiquement 100%, par exemple de 80% à 99,9% ou moins, par exemple de 80% à 97%.

5. Procédé selon l'une quelconque des revendications 1 à 4, le motif étant répliqué sur le film à base de cellulose par lithographie par nano-impression, NIL, ou par gaufrage.

6. Agencement pour la fabrication d'un film à base de cellulose et à motifs, comprenant :
- une première surface pour supporter un film à base de cellulose à modifier par un motif fourni par un moule ; et
- une deuxième surface pour supporter le moule, ladite deuxième surface étant agencée à une certaine distance de la première surface, pour loger le film à base de cellulose et le moule l'un au-dessus de l'autre entre la première surface et la deuxième surface ; et
- un dispositif d'humidification pour provoquer l'absorption d'eau dans le film à base de cellulose de telle sorte que lorsque le film à base de cellulose et le moule sont positionnés l'un au-dessus de l'autre entre la première surface et la deuxième surface, le film à base de cellulose est pressé contre le moule en réponse au volume augmenté du film à base de cellulose provoqué par l'eau absorbée.

7. Agencement selon la revendication 6, l'agencement comprenant un dispositif de séchage pour sécher le film à base de cellulose après que le film à base de cellulose a été modifié.

8. Agencement selon la revendication 6 ou 7, le film à base de cellulose étant un film à base de cellulose polymère, un film à base de cellulose fibrillé ou un film à base de cellulose à fibres, un film en nanofibrille de cellulose, CNF, de préférence en nanofibrille de cellulose oxydée par TEMPO, TEMPO-CNF.

9. Agencement selon la revendication 6, 7 ou 8, le dispositif d'humidification étant conçu pour soumettre le film à base de cellulose à de la vapeur d'eau présentant une humidité relative de 75% à pratiquement 100%, de préférence de 80% à pratiquement 100%, par exemple de 80% à 99,9% ou moins, par exemple de 80% à 97%.

10. Agencement selon l'une quelconque des revendications 6 à 9, le motif étant répliqué sur le film à base de cellulose par lithographie par nano-impression, NIL, ou par gaufrage.

11. Agencement selon l'une quelconque des revendications 6 à 10, la première surface et la deuxième surface pouvant tourner pour recevoir une alimentation continue en film à base de cellulose et produire un film continu à base de cellulose et à motifs.

12. Machine de calandrage comprenant l'agencement selon l'une quelconque des revendications 6 à 11.

13. Dispositif rouleau à rouleau comprenant un rouleau d'entrée d'un film à base de cellulose et un rouleau de sortie et l'agencement selon l'une quelconque des revendications 6 à 11, le dispositif rouleau à rouleau étant conçu pour alimenter le film à base de cellulose à partir du rouleau d'entrée vers le rouleau de sortie à travers l'agencement.
